# EUROPÄISCHE PATENTSCHRIFT

(11) **EP 3 270 048 B1**
(45) Veröffentlichungstag und Bekanntmachung des Hinweises auf die Patenterteilung: **16.10.2024**
(21) Anmeldenummer: 17179455.5
(22) Anmeldetag: 04.07.2017
(51) Int. Cl.: F21V 8/00

(54) **LEUCHTE MIT DURCHGANGSÖFFNUNGEN**
LIGHT WITH PASSAGE OPENINGS
ÉCLAIRAGE COMPRENANT DES OUVERTURES DE PASSAGE

(30) Priorität: 15.07.2016 DE 202016103837 U
(43) Veröffentlichungstag der Anmeldung: 17.01.2018
(73) Patentinhaber: Zumtobel Lighting GmbH, 6850 Dornbirn (AT)
(72) Erfinder: Gassner, Patrik, 6722 St. Gerold (AT); Junghans, Bert, 6811 Göfis (AT); Konzilia, Bernhard, 6850 Dornbirn (AT); Niederstätter, Andreas, 6850 Dornbirn (AT); Habisreutinger, Jürgen, 6850 Dornbirn (AT); Ludwiczak, Bogna, 88145 Opfenbach (DE); Suresh, Pula, 6850 Dornbirn (AT)
(74) Vertreter: Kiwit, Benedikt

(56) Entgegenhaltungen:
- EP-A2- 2 796 769
- WO-A2-2015/086925
- CN-A- 101 598 271
- DE-T2- 69 713 870
- JP-A- 2002 169 034
- KR-A- 20140 072 635
- US-A1- 2007 109 810
- US-A1- 2010 085 750
- US-B1- 6 474 826
- US-B1- 8 911 132

## Beschreibung

Die vorliegende Erfindung betrifft eine Leuchte mit einer Lichtleitplatte und Leuchtmitteln zum stirnseitigen Einkoppeln von Licht in die Lichtleitplatte.

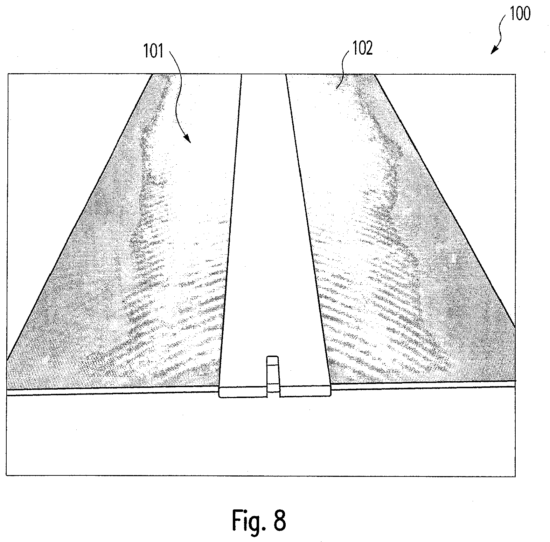

Leuchten 100 der eingangs genannten Art sind aus dem Stand der Technik grundsätzlich bekannt (vgl. Figur 8). Solche Leuchten 100 werden in der Regel unter Anwendung der LED-Technologie als Leuchtmittel eingesetzt und werden auch als "Waveguide-Leuchten" bezeichnet. Bei diesem Leuchtentyp wird das von der LED erzeugte Licht über eine seitliche Kante in die transparente (Kunstoff-)Lichtleitplatte 102 (bevorzugt Brechungsindex N>1) eingekoppelt. Mittels mehrfacher Totalreflexion propagiert der Lichtstrahl in der Platte solange, bis er auf ein Auskoppelelement trifft. Ein solches Element ändert die Laufrichtung des Lichtstrahls, so dass er die Lichtleitplatte 102 unter einem bestimmten Winkel verlassen kann.

Da die Auskoppelstruktur das Licht in einer spezifischen und präzisen Art und Weise auskoppeln, tendiert das System dazu, die Anordnung der Lichtquellen auf der ganzen Lichtleitplatte 102 - d. h. insbesondere auf jedem einzelnen Auskoppelelement - abzubilden. Dieser Effekt wird noch verstärkt, wenn die Auskoppelstrukturen in einem festen Abstandsverhältnis zueinander stehen. Wenn der Abstand (Pitch) zwischen den LEDs sichtbar ist, entstehen auf der Lichtleitplatte meist sichtbare, störende Streifen 101, wie sie beispielsweise in Figur 8 dargestellt sind. Beim Einsatz von Tunable White LED-Modulen können diese Streifen 101 zusätzlich farbliche Unterschiede aufzeigen, was das optische Erscheinungsbild einer derartigen Leuchte 100 weiter negativ beeinträchtigt.

Die Verwendung einer dünnen, fortlaufenden, linearen Lichtquelle würde das zuvor aufgezeigte Problem weitestgehend lösen. In der Praxis werden daher engbestückte LED-Boards eingesetzt, welche jedoch einen hohen Kostenfaktor darstellen. Dies insbesondere deswegen, da grundsätzlich zu Beleuchtungszwecken eine derart hohe Anzahl an LEDs nicht erforderlich wäre. US 8 911 132 B1 offenbart eine Leuchte.

Es ist somit eine Aufgabe der vorliegenden Erfindung, eine Leuchte der eingangs genannten Art bereitzustellen, mit der auch bei größerem Abstand der Leuchtmittel - beispielsweise Pitch-Abstand der LEDs - zueinander ein harmonisches Erscheinungsbild der Leuchte ohne unerwünschte Musterbildung bereitgestellt werden kann.

Diese Aufgabe wird durch den Gegenstand des Anspruchs 1 gelöst. Die abhängigen Ansprüche bilden den zentralen Gedanken der Erfindung in besonders vorteilhafter Weise weiter.

Weitere Ausgestaltungen und Vorteile der vorliegenden Erfindung werden anhand der Figuren der begleitenden Zeichnung im Folgenden beschrieben. Es zeigen:
- Figur 1: eine perspektivische Ansicht einer erfindungsgemäßen Leuchte gemäß einem ersten Ausführungsbeispiel,
- Figur 2: eine Detailansicht einer erfindungsgemäßen Leuchte gemäß einem zweiten Ausführungsbeispiel,
- Figur 3: eine Detailansicht einer erfindungsgemäßen Leuchte gemäß einem dritten Ausführungsbeispiel,

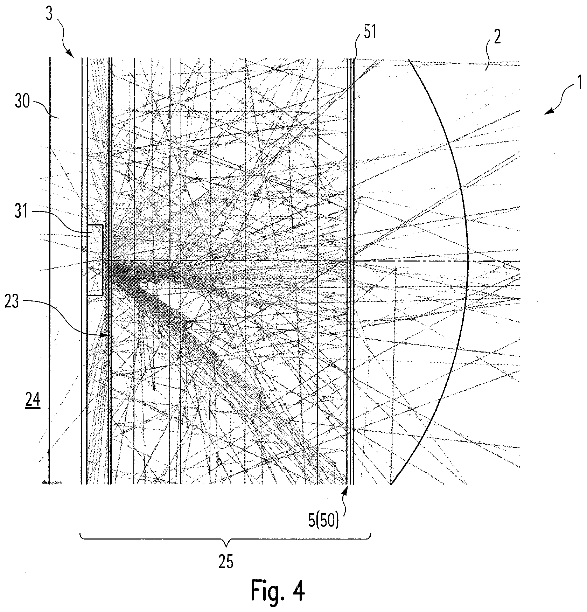

- Figur 4: eine Detailansicht einer Leuchte gemäß einem vierten Beispiel, welche kein Ausführungsbeispiel der Erfindung ist,
- Figur 5: eine Draufsicht auf eine Lichtleitplatte einer erfindungsgemäßen Leuchte mit einer Auskoppelstruktur gemäß einem fünften Ausführungsbeispiel,
- Figur 6: eine Draufsicht auf eine Lichtleitplatte einer erfindungsgemäßen Leuchte mit einer Auskoppelstruktur gemäß einem sechsten Ausführungsbeispiel,
- Figur 7: eine Draufsicht auf eine Lichtleitplatte einer erfindungsgemäßen Leuchte mit einer Auskoppelstruktur gemäß einem siebten Ausführungsbeispiel,
- Figur 8: eine perspektivische Ansicht einer Leuchte gemäß dem Stand der Technik.

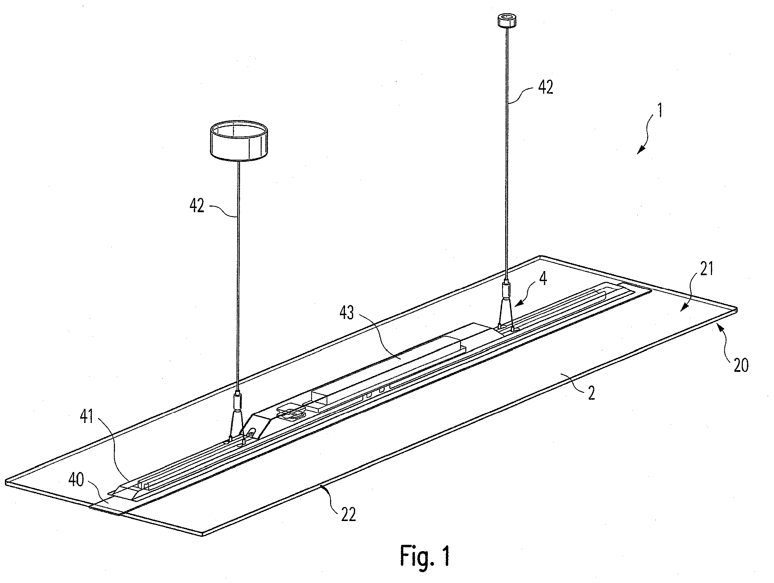

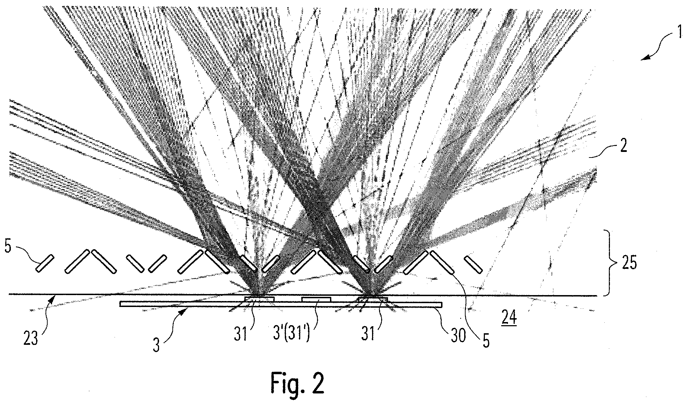

Figur 1 zeigt beispielhaft eine erfindungsgemäße Leuchte 1 gemäß der vorliegenden Erfindung. Diese Leuchte 1 weist eine Lichtleitplatte 2 mit zwei flächigen Seiten 20, 21 auf, welche durch eine oder mehrere Stirnseiten 22, 23 miteinander verbunden sind. In dem dargestellten Ausführungsbeispiel weist die Lichtleitplatte 2 eine außen umlaufende Stirnseite 22 sowie eine in Figur 1 nicht sichtbare jedoch in den Ausführungsbeispielen der Figuren 2 bis 3 dargestellte (innere) Stirnseite 23, welche durch eine die flächigen Seiten 20, 21 verbindende Ausnehmung 24 gebildet ist. Die Lichtleitplatte 2 kann aus jedem beliebigen Material, welches für Lichtleitplatten geeignet ist, hergestellt sein. Beispielhaft sind hier transparente Kunststoffplatten zu nennen.

Des Weiteren weist die erfindungsgemäße Leuchte 1 Leuchtmittel 3 zum Einkoppeln von Licht in die Lichtleitplatte 2 über die Stirnseite 22, 23 auf. Dabei ist es denkbar, wie in den vorliegenden Ausführungsbeispielen dargestellt, eine sogenannte rahmenlose Leuchte 1 bereitzustellen, welche eine Leuchten-Tragstruktur 4 über die vorbezeichnete Ausnehmung 24 bereitstellt. Hierzu weist die entsprechende Tragstruktur 4 beispielsweise einen unterseitigen Träger 40 auf, auf dem die Lichtleitplatte 2 aufliegt. Dieser Träger 40 ist oberseitig mit einem Gehäuse 41 verbunden, um die Lichtleitplatte 2 dazwischen einzuspannen. In der Ausnehmung 24 sind dann entsprechend stirnseitig die Leuchtmittel 3 vorzugsweise gleichmäßig entlang der Stirnseite 23 verteilt angeordnet. Bei den Leuchtmitteln 3 handelt es sich bevorzugt um LEDs bzw. LED-Module; letztere bevorzugt bestehend aus einer hier länglich dargestellten Leiterplatte 30, welche sich wenigstens über einen Teil der entsprechenden Stirnseite 22, 23 erstreckt, sowie auf der Leiterplatte 30 angeordneten LED-Chips 31, welche auf die Stirnseite 22, 23 gerichtet sind, um in die Lichtleitplatte 2 einzustrahlen (vgl. Figuren 2 bis 3).

In einer anderen Ausführungsform ist es alternativ oder zusätzlich denkbar, dass die Leuchtmittel 3 in die außen umlaufende Stirnseite 22 der Lichtleitplatte 2 das Licht in diese einkoppeln. Die Leuchtmittel 3 können dabei in einem randseitig vorgesehenen Profilrahmen angeordnet und mittels diesem an der Lichtleitplatte 2 befestigt sein. Auch eine Kombination der beiden vorgenannten Ausführungsbeispiele ist denkbar. Zudem können die die Tragstruktur 4 aufnehmenden Ausnehmungen 24 sowohl in Anzahl als auch in Geometrie und Dimension beliebig ausgebildet sein.

Wie in dem Ausführungsbeispiel der Figur 1 dargestellt, können an der Tragstruktur 4 des Weiteren Befestigungselemente 42 vorgesehen sein, um die Leuchte 1 beispielsweise an einer Decke vorzusehen. Dabei kann es sich um starre Befestigungselemente für eine An- oder Einbauleuchte oder auch um eine Stab- oder Seilkonstruktion 42 für eine Pendelleuchte handeln. Die Aufhängestruktur beispielsweise in Form von Seilen 42 kann gleichzeitig zur Stromführung genutzt werden. Rückseitig der Tragstruktur 4 oder von dieser eingehäust können des Weiteren beliebige elektrische und elektronische Bauteile der Leuchte vorgesehen sein, wie beispielsweise ein Treiber 43.

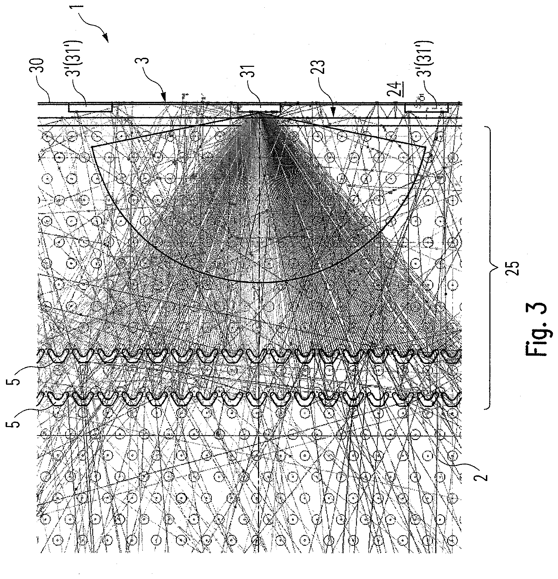

Mit Verweis auf die Ausführungsbeispiele der Figuren 2 bis 3 weist die Lichtleitplatte 2 der erfindungsgemäßen Leuchte 1 des Weiteren mehrere, die beiden flächigen Seiten 20, 21 verbindende Durchgangsöffnungen 5 auf. Bei diesen Durchgangsöffnungen 5 handelt es sich um Durchgangsspalte, also um Durchgangsöffnungen 5, welche bezüglich ihrer Längserstreckung eine vergleichsweise geringe Breite aufweisen. Die Längserstreckung muss dabei jedoch nicht geradlinig verlaufen, sondern kann auch, wie in einzelnen Ausführungsbeispielen beispielsweise der Figur 3 gezeigt, bogenförmig, hakenförmig oder anderweitig gebogen oder geformt verlaufen. Dies wird im Weiteren anhand der Ausführungsbeispiele noch näher erläutert.

Die Durchgangsöffnungen 5 sind dabei derart bereitgestellt, um das in die Lichtleitplatte 2 mittels der Leuchtmittel 3 eingekoppelte Licht je Leuchtmittel 3 in der Lichtleiplatte 2 umzulenken; es also zum weiteren Propagieren innerhalb der Lichtleitplatte 2 umzulenken. Die Durchgangsöffnungen 5 dienen folglich nicht der definierten oder undefinierten Lichtauskopplung des über die Leuchtmittel 3 eingekoppelten Lichts, sondern sollen insbesondere deren Richtung innerhalb der Lichtleitplatte verändern, um bevorzugt die Abbildung einzelner Leuchtmittel 3 bei der Lichtauskopplung aus der Leuchte 1 aufzulösen und das somit sich in der Lichtleiplatte 2 fortpflanzende Licht im Idealfall in eine lineare, fortlaufende Lichtquelle umzuwandeln. Insbesondere soll das Licht mittels Umlenkung oder Streuung bzw. Totalreflexion und/oder Lichtbrechung an den Durchgangsöffnungen 5 entsprechen umgelenkt werden.

In einer bevorzugten Ausgestaltungsform sind die Durchgangsöffnungen 5 im Bereich der Einkoppelzone 25 des Lichts der Leuchtmittel 3 in die Lichtleitplatte 2 und insbesondere in einer Durchmischzone der Leuchtmittel 3 - beispielsweise bei verschiedenfarbigen LEDs zur Erzeugung von Mischlicht wie insbesondere Weißlicht - vorgesehen. Insbesondere bei der in Figur 1 dargestellten Ausführungsform befindet sich diese Einkoppelzone bzw. Durchmischzone 25 bevorzugt in dem durch die Tragstruktur 4 flächig abgedeckten Bereich der Lichtleitplatte 2, so dass die Durchgangsöffnungen 5 von außen nicht sichtbar sind, die Einkoppel- bzw. Durchmischzone 25 somit ebenso nicht zu sehen ist und des Weiteren die Durchgangsöffnungen 5 bevorzugt keine mechanischen Auswirkungen auf die Tragbelastungen der über die Tragkonstruktion getragenen Lichtleitplatte 2 aufweist.

Die Durchgangsöffnungen 5 erstrecken sich bevorzugt senkrecht zwischen den zwei flächigen Seiten 20, 21. Auf diese Weise kann eine sichere Umlenkung des Lichtes innerhalb der Lichtleitplatte 2 erfolgen, ohne Licht ungewünscht durch entsprechende Winkeländerung aus der Lichtleitplatte 2 auszukoppeln, sodass keine Beeinträchtigung der Leuchteffizienz der Leuchte 1 durch Lichtverlust erfolgt.

Mit Verweis auf Figur 2 ist es ferner denkbar, die Durchgangsöffnungen 5 in Draufsicht auf die Lichtleitplatte 2 zur Stirnseite 22, 23, bzw. zum jeweiligen Leuchtmittel 3 abgewinkelt anzuordnen, um wenigstens teilweise in einem (definierten) Winkel zum jeweiligen Leuchtmittel 3 zu stehen, sodass das Licht mittels Totalreflexion an den Durchgangsöffnungen 5 oder die Durchgangsöffnungen 5 durchdringend umgelenkt - also beispielsweise gestreut - wird. Dies ist beispielhaft durch die Lichtführung in Figur 2 dargestellt. Durch die mittels der Durchgangsöffnungen 5 erfolgte Umlenkung des Lichtes kann folglich neben den real vorliegenden Leuchtmitteln 3 das Licht in der Lichtleitplatte 2 derart bereitgestellt werden - also sich ausbreiten - als wären zusätzliche (virtuelle) Leuchtmittel 3' (31') neben bzw. zwischen den real vorliegenden Leuchtmitteln 3 vorgesehen. Durch diese virtuelle Erhöhung der eingesetzten Leuchtmittel 3 können unerwünschte Streifenbildungen, wie zuvor beschrieben, stark vermindert oder gar vermieden werden.

Auch diese schlitzartigen Durchgangsöffnungen 5 des Ausführungsbeispiels der Figur 2 können mit entsprechenden Licht-beeinflussenden Strukturen oder Elementen ergänzt werden. Dabei können beispielsweise Reflexion-unterstützende Reflektoren vorgesehen werden. Ferner ist es ergänzend oder alternativ denkbar, anderweitige lichtstreuende bzw. lichtlenkende Strukturen oder Elemente an bzw. in den Durchgangsöffnungen 5 vorzusehen. Beispielsweise kann die die Durchgangsöffnung 5 begrenzende Fläche ebenso aufgeraut oder mittels einer Streufolie bzw. Lentikularfolie ausgebildet sein.

Mit Verweis auf Figur 3 ist eine besonders bevorzugte Ausführungsform dargestellt.

Dabei sind die Durchgangsöffnungen 5 in Draufsicht auf die Lichtleitplatte 2 in einer besonders definierten Form ausgebildet. Bei dieser Form kann es sich beispielsweise um Pfeilspitzen oder Bögen oder - wie hier dargestellt -Nadelstreifen handeln. Diese sind bevorzugt zur Stirnseite 22, 23 bzw. zum jeweiligen Leuchtmittel 3 hin aufweitend angeordnet. Durch diese Struktur kann eine besonders effektive Auflösung einzelner Lichtquellen 3 ermöglicht werden, indem die Anzahl der Leuchtmittel 3 virtuell stark vergrößert wird, um somit mit vergleichsweise wenig Leuchtmitteln 3 ein besonders harmonisches Erscheinungsbild der Leuchte 1 ohne unerwünschte Streifenbildung zu ermöglichen, indem das Licht durch die Durchgangsöffnungen 5 besonders effektiv gestreut und gemischt wird.

Neben der hier dargestellten Nadelstreifenform sind selbstverständlich auch andere beliebige Formen - insbesondere in Draufsicht auf die Lichtleitplatte 2 - denkbar. Beispielsweise kann es sich auch um in Draufsicht auf die Lichtleitplatte 2 gesehen runde, kreisförmige, mehreckige oder längliche Formen in beliebiger Ausgestaltung und Erstreckung handeln.

In einer besonders bevorzugten Ausgestaltungsform ist es, wie in Figur 3 gezeigt, denkbar, die Durchgangsöffnungen 5 nicht nur in einer Reihe (wie in Figur 2 dargestellt) anzuordnen, sondern die Durchgangsöffnung 5 in Draufsicht auf die Lichtleitplatte gesehen in mehreren Reihen insbesondere bezüglich der Stirnseite 22, 23 bzw. Leuchtmittel 3 anzuordnen. Mithin also mehrere Lichtumlenkstrukturen gebildet durch Durchgangsöffnungen 5 in Lichtabstrahlrichtung hintereinander geschaltet vorzusehen. Auf diese Weise kann eine Lichtumlenkstruktur mit weiter gesteigerter Effizienz der Lichtstreuung und Auflösung einzelner Lichtpunkte bereitgestellt werden. Selbstverständlich lässt sich die mehrreihige Anordnung der Durchgangsöffnungen 5 auf alle denkbaren Ausführungsbeispiele anwenden.

Die Lichtleitplatte 2 weist des Weiteren Auskoppelbereiche 6 zum Auskoppeln des von den Leuchtmitteln 3 in die Lichtleitplatte 2 eingekoppelten Lichts aus der Lichtleitplatte 2 auf. Erfindungsgemäß sind dabei die Durchgangsöffnungen 5 zwischen Leuchtmitteln 3 einerseits und Auskoppelbereichen 6 andererseits vorgesehen. Somit kann das über die Leuchtmittel 3 eingekoppelte Licht zunächst entsprechend über die Durchgangsöffnungen umgelenkt und somit bestmöglich durchmischt und bevorzugt gestreut in der Lichtleitplatte 2 weiter propagieren, bevor es letztlich - unter der so erzielten Auflösung der einzelnen Lichtpunkte - aus der Lichtleitplatte 2 ausgekoppelt wird.

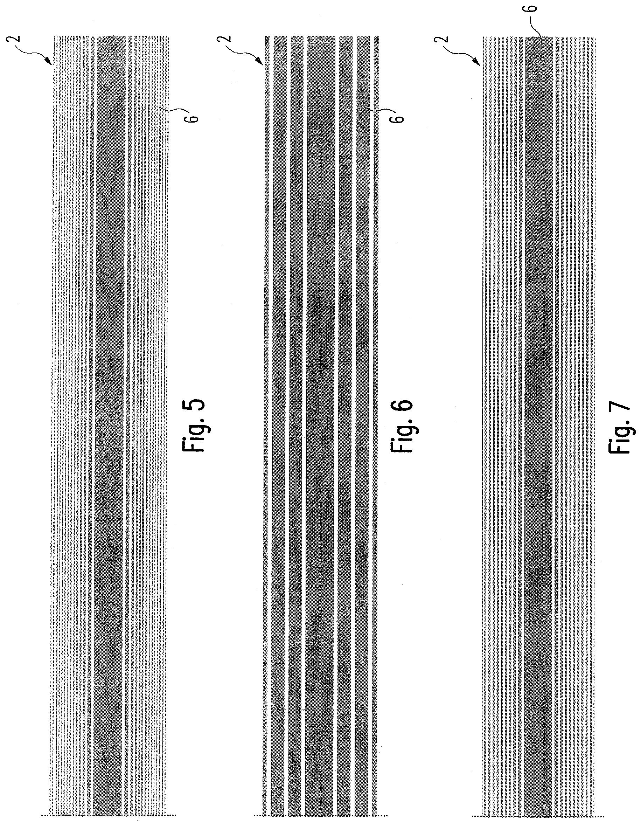

Die Auskoppelbereiche 6 sind erfindungsgemäß, wie in den Figuren 6 bis 8 dargestellt, als reflektive Bedruckung 6 auf wenigstens einer der flächigen Seiten 20, 21 vorgesehen sein, um das Licht zu der jeweils gegenüberliegenden flächigen Seite 21, 20 umzulenken und über diese aus der Lichtleitplatte 2 auszukoppeln. Durch die Verwendung von Auskoppelbereichen bzw. -strukturen 6 in Form von reflektiven Bedruckungen - beispielweise durch hochreflektive weiße Farbe - kann eine beliebige und auch komplexe Auskoppelstruktur 6 in einfacher Weise auf der Lichtleitplatte 2 vorgesehen werden. Die Auskoppelbereiche 6 sind dabei erfindungsgemäß definiert gleichmäßig und/oder symmetrisch über die flächige Seite 20,21 der Lichtleitplatte 2 vorgesehen und sind, wie dargestellt, streifenartig angeordnet. Auch andere Anordnungen sind denkbar, wie beispielsweise eine rasterartige oder matrixartige Anordnung.

Insbesondere ist es mittels der reflektiven Bedruckung 6 in einfacher Weise möglich, eine für eine Fehlererkennung optimal ausgebildete Auskoppelstruktur bereitzustellen, wie sie aus dem Stand der Technik bisher bevorzugt mittels Qualitätskontrollleuchten bestehend aus Leuchtstoffröhren mit in Lichtabgaberichtung nachgeschaltetem Reflektor und weiter nachgeschalteter, länglicher Optik mit integral ausgebildeter Lichtlenkstruktur bekannt ist. Nachteilig an den aus dem Stand der Technik bekannten Qualitätskontrollleuchten war es, dass je nach gewünschter Fehlererkennung eine andere Optik verwendet werden musste, welche folglich mittels eines eigens bereitgestellten Werkzeugs hergestellt werden musste. Dies erforderte einen besonders hohen und kostenaufwendigen Werkzeugeinsatz zur Bereitstellung unterschiedlicher Qualitätskontrollleuchten. Durch die erfindungsgemäße Verwendung von Auskoppelbereichen 6 mittels reflektiver Bedruckung ist es nunmehr möglich, in einfacher und kostengünstiger Weise eine Qualitätskontrollleuchte bereitzustellen, welche auf die definierten und zu überprüfenden Objekte ausgebildet ist.

Erfindungsgemäß wird auf der der Auskopplung gegenüberliegenden flächigen Seite 20, 21 bzw. auf Seiten der Auskoppelbereiche 6 ein Reflektorelement und/oder Streuelement insbesondere in Form eines sogenannten MC-Pet vorgesehen.

Dieses bildet dann einen rückseitigen Reflektor, um die Lichtabgabe der Leuchte 1 in seiner Effizienz weiter zu steigern. Des Weiteren kann dieses MC-Pet bzw. auch ein anderes beliebiges Reflektorelement/Streuelement derart vorgesehen sein, dass es bevorzugt senkrecht zur Erstreckungsebene der flächigen Seite 20, 21 beweglich vorgesehen ist, um den Abstand zur flächigen Seite 20, 21 definiert und beliebig zu verändern bzw. einzustellen. Insbesondere in Kombination mit dem vorbeschriebenen MC-Pet ist es somit in einfacher Weise möglich, den Kontrast der Lichtabgabe entsprechend einzustellen. Somit kann neben der durch die bevorzugt als Bedruckung bereitgestellten Auskoppelbereiche 6 zur Anpassung der Auflösung der Lichtabgabe und somit Qualitätskontrolle des Weiteren auch der Kontrast derselben eingestellt werden, um somit eine Qualitätskontrollleuchte bereitzustellen, welche auf das zu detektierende Objekt optimal eingestellt werden kann, um eine besonders gute Fehlererkennung zu ermöglichen.

Der Abstand (Pitch) jeweils benachbarter Leuchtmittel 3 und insbesondere LEDs bzw. LED-Chips 31 beträgt bevorzugt bis zu 12 mm, ferner bevorzugt bis zu 18 mm, noch weiter bevorzugt bis zu 22 mm und besonders bevorzugt bis zu 25 mm oder auch mehr. Insbesondere ist ein Pitchabstand bevorzugt, wie er beispielsweise bei handelsüblichen LED-Modulen üblich ist. Trotz des vergleichsweise großen Pitches kann es mittels der erfindungsgemäßen Durchgangsöffnungen 5 ermöglicht werden, die einzelnen Lichtpunkte aufzulösen und somit eine Lichtabgabe bereitzustellen, welche quasi virtuelle Leuchtmittel 3' (31') abbildet und somit bevorzugt ein harmonisches Erscheinungsbild der Leuchte durch Abbildung einer im Idealfall linearen, fortlaufenden Lichtquelle umgewandelt darzustellen.

Die vorliegende Erfindung ist auf die vorhergehenden Ausführungsbeispiele nicht beschränkt, sofern sie vom Gegenstand der folgenden Ansprüche umfasst ist. So ist beispielsweise die Anordnung der zur Lichteinkopplung bereitgestellten Stirnseiten 22, 23 durch die Erfindung nicht beschränkt. Es kann sich beispielsweise um randseitige Stirnseiten 22 oder auch mittels Ausnehmung sich ergebende Stirnseiten 23 im Inneren des Lichtleiters 2 - also in Draufsicht innerhalb seiner Fläche - handeln. Selbstverständlich sind auch die Art der Aufhängung der Lichtleitplatte 2 sowie dessen Geometrie, Dimension und die verwendeten Materialien durch die Erfindung nicht beschränkt. Es kann sich bspw. um eine Pendelleuchte, Anbauleuchte, Einbauleuchte, Tischleuchte, Stehleuchte oder Handleuchte (bspw. Qualitätskontrollleuchte) handeln. Auch ist letztlich die Ausgestaltung der Durchgangsspalte 5 durch die Erfindung nicht beschränkt, sofern sie eine entsprechende Umlenkung des von den Leuchtmitteln 3 abgegebenen Lichts in der Lichtleitplatte 2 ermöglichen; bevorzugt in einer Art, dass sich quasi die Bereitstellung virtueller Leuchtmittel in Ergänzung zu den real vorliegenden Leuchtmitteln 3 ergibt. Die Durchgangsöffnungen 5 sind bevorzugt als Luftspalte bereitgestellt, welche mit optisch beeinflussenden Strukturen oder Elementen versehen sein können.

## Patentansprüche

1. Leuchte (1) aufweisend:
eine Lichtleitplatte (2) mit zwei flächigen Seiten (20, 21), welche durch eine Stirnseite (22, 23) miteinander verbunden sind, und
Leuchtmittel (3) zum Einkoppeln von Licht in die Lichtleitplatte (2) über die Stirnseite (22, 23),
wobei die Lichtleitplatte (2) mehrere, die beiden flächigen Seiten (20, 21) verbindende Durchgangsöffnungen (5) aufweist, um das in die Lichtleitplatte (2) eingekoppelte Licht je Leuchtmittel (3) in der Lichtleitplatte (2) umzulenken,
die Durchgangsöffnungen (5) Durchgangsspalte sind, die in Draufsicht auf die Lichtleitplatte (2) gesehen eine längliche Form aufweisen,
wobei die Lichtleitplatte (2) Auskoppelbereiche (6) zum Auskoppeln des von den Leuchtmitteln (3) in die Lichtleitplatte (2) eingekoppelten Lichts aus der Lichtleitplatte (2) aufweist, wobei die Durchgangsöffnungen (5) zwischen Leuchtmittel (3) einerseits und Auskoppelbereichen (6) andererseits vorgesehen sind,
und wobei die Auskoppelbereiche (6) definiert gleichmäßig und/oder symmetrisch über eine der flächigen Seiten (20, 21) der Lichtleitplatte (2) verteilt vorgesehen und streifenartig, rasterartig oder matrixartig angeordnet sind,
**dadurch gekennzeichnet, dass**
die Auskoppelbereiche (6) als reflektive Bedruckung auf wenigstens einer der flächigen Seiten (20, 21) vorgesehen ist, um das Licht zu der jeweils gegenüberliegenden flächigen Seite (21, 20) umzulenken und über diese aus der Lichtleitplatte (2) auszukoppeln, und
wobei auf der der Auskopplung gegenüberliegenden flächigen Seite (20, 21) oder auf Seiten der Auskoppelbereiche (6) ein Reflektorelement und/oder Streuelement vorgesehen ist, welches senkrecht zur Erstreckungsebene der flächigen Seite (20, 21) beweglich vorgesehen ist, um den Abstand zur flächigen Seite (20, 21) zu verändern.

2. Leuchte (1) nach Anspruch 1, wobei die Durchgangsöffnungen (5) derart ausgebildet sind, um das in die Lichtleitplatte (2) eingekoppelte Licht je Leuchtmittel (3) gerichtet oder diffus in der Lichtleitplatte (2) umzulenken.

3. Leuchte (1) nach Anspruch 1 oder 2, wobei die Durchgangsöffnungen im Bereich der Einkoppelzone (25) des Lichts der Leuchtmittel (3), insbesondere in einer Durchmischzone der Leuchtmittel (3), vorgesehen sind.

4. Leuchte (1) nach einem der vorhergehenden Ansprüche, wobei die Durchgangsöffnungen (5) sich senkrecht zwischen den zwei flächigen Seiten (20, 21) erstrecken.

5. Leuchte (1) nach einem der vorhergehenden Ansprüche, wobei die Durchgangsöffnungen (5) in Draufsicht auf die Lichtleitplatte (2) gesehen zur Stirnseite (22, 23) bzw. zum jeweiligen Leuchtmittel (3) abgewinkelt angeordnet sind, um wenigstens teilweise in einem Winkel zum jeweiligen Leuchtmittel (3) zu stehen, so dass das Licht mittels Totalreflektion an den Durchgangsöffnungen (5) oder die Durchgangsöffnungen (5) durchdringend umgelenkt wird.

6. Leuchte (1) nach einem der vorhergehenden Ansprüche, wobei die Durchgangsöffnungen (5) in Draufsicht auf die Lichtleitplatte (2) gesehen in einer oder mehreren Reihen bezüglich der Stirnseite (22, 23) bzw. der Leuchtmittel (3) angeordnet sind.

7. Leuchte (1) nach einem der vorhergehenden Ansprüche, wobei die Durchgangsöffnungen (5) bevorzugt wenigstens im Bereich ihrer Grenzflächen zu der Lichtleitplatte (2) Licht-beeinflussende Strukturen (51) aufweisen, wie beispielsweise Reflektoren und/oder lichtstreuende bzw. lichtlenkende Strukturen oder Elemente.

8. Leuchte (1) nach einem der vorhergehenden Ansprüche, wobei das Reflektorelement und/oder Streuelement ein MC-Pet ist.

9. Leuchte (1) nach einem der vorhergehenden Ansprüche, wobei die Leuchtmittel (3) LEDs bzw. LED-Module aufweisen.

10. Leuchte (1) nach einem der vorhergehenden Ansprüche, wobei der Abstand, Pitch, jeweils benachbarter Leuchtmittel (3), insbesondere LEDs, bis zu 12 mm, vorzugsweise bis zu 18 mm, weiter bevorzugt bis zu 22 mm und besonders bevorzugt bis zu 25 mm beträgt.

## Claims

1. Luminaire (1), comprising:
a light guide plate (2) having two planar sides (20, 21) which are interconnected by an end face (22, 23), and
lamps (3) for coupling light into the light guide plate (2) via the end face (22, 23),
wherein the light guide plate (2) has a plurality of through openings (5) connecting the two planar sides (20, 21) in order to deflect the light coupled into the light guide plate (2) per lamp (3) in the light guide plate (2),
the through openings (5) are through gaps which have an elongate shape when viewed in a plan view of the light guide plate (2),
wherein
the light guide plate (2) has decoupling regions (6) for decoupling the light coupled into the light guide plate (2) by the lamps (3) out of the light guide plate (2), wherein the through openings (5) are provided between the lamps (3) and the decoupling regions (6),
and wherein
the decoupling regions (6) are distributed in a defined uniform and/or symmetrical manner over one of the planar sides (20, 21) of the light guide plate (2) and are arranged in a strip-like, grid-like or matrix-like manner,
**characterized in that**
the decoupling regions (6) are provided as a reflective printing on at least one of the planar sides (20, 21) in order to deflect the light to the opposite planar side (21, 20) and to decouple it out of the light guide plate (2) via this side, and
wherein a reflector element and/or scattering element is provided on the planar side (20, 21) opposite the decoupling or on sides of the decoupling regions (6), which element is provided so as to be movable perpendicularly to the plane of extension of the planar side (20, 21) in order to change the distance to the planar side (20, 21).

2. Luminaire (1) according to claim 1, wherein the through openings (5) are designed to deflect the light coupled into the light guide plate (2) per lamp (3) in a directed or diffuse manner in the light guide plate (2).

3. Luminaire (1) according to either claim 1 or 2, wherein the through openings are provided in the region of the in-coupling zone (25) of the light of the lamps (3), in particular in a mixing zone of the lamps (3).

4. Luminaire (1) according to any of the preceding claims, wherein the through openings (5) extend perpendicularly between the two planar sides (20, 21).

5. Luminaire (1) according to any of the preceding claims, wherein the through openings (5) are arranged at an angle to the end face (22, 23) or to the relevant lamp (3), when viewed in a plan view of the light guide plate (2), in order to be at least partially at an angle to the relevant lamp (3) so that the light is deflected by means of total reflection at the through openings (5) or in a manner penetrating the through openings (5).

6. Luminaire (1) according to any of the preceding claims, wherein the through openings (5) are arranged in one or more rows with respect to the end face (22, 23) or the lamps (3), when viewed in a plan view of the light guide plate (2).

7. Luminaire (1) according to any of the preceding claims, wherein the through openings (5) preferably have light-influencing structures (51), such as reflectors and/or light-scattering or light-deflecting structures or elements, at least in the region of their interfaces with respect to the light guide plate (2).

8. Luminaire (1) according to any of the preceding claims, wherein the reflector element and/or scattering element is an MC-PET.

9. Luminaire (1) according to any of the preceding claims, wherein the lamps (3) comprise LEDs or LED modules.

10. Luminaire (1) according to any of the preceding claims, wherein the distance, pitch, between adjacent lamps (3), in particular LEDs, is up to 12 mm, preferably up to 18 mm, more preferably up to 22 mm and particularly preferably up to 25 mm.

## Revendications

1. Luminaire (1) présentant :
une plaque de guidage de lumière (2) comportant deux côtés plats (20, 21) qui sont reliés entre eux par un côté frontal (22, 23), et
des moyens d'éclairage (3) permettant de coupler de la lumière dans la plaque de guidage de lumière (2) par l'intermédiaire du côté frontal (22, 23),
dans lequel la plaque de guidage de lumière (2) présente plusieurs ouvertures de passage (5) reliant les deux côtés plats (20, 21) afin de dévier la lumière couplée dans la plaque de guidage de lumière (2) par chaque moyen d'éclairage (3) dans la plaque de guidage de lumière (2),
les ouvertures de passage (5) sont des fentes de passage qui, vues en vue de dessus sur la plaque de guidage de lumière (2), présentent une forme allongée,
dans lequel
la plaque de guidage de lumière (2) présente des zones de découplage (6) permettant de découpler de la plaque de guidage de lumière (2) la lumière couplée par les moyens d'éclairage (3) dans la plaque de guidage de lumière (2), dans lequel les ouvertures de passage (5) sont prévues entre les moyens d'éclairage (3) d'une part et les zones de découplage (6) d'autre part,
et dans lequel
les zones de découplage (6) sont prévues de manière à être réparties de manière définie régulièrement et/ou symétriquement sur l'un des côtés plats (20, 21) de la plaque de guidage de lumière (2) et sont disposées à la manière de bandes, de grilles ou de matrices,
**caractérisé en ce que**
les zones de découplage (6) sont prévues sous la forme d'une impression réfléchissante sur au moins l'un des côtés plats (20, 21) afin de dévier la lumière vers le côté plat (21, 20) respectivement opposé et de la découpler de la plaque de guidage de lumière (2) par l'intermédiaire dudit côté plat, et
dans lequel un élément réflecteur et/ou élément diffuseur est prévu sur le côté plat (20, 21) opposé au découplage ou sur des côtés des zones de découplage (6), lequel élément est prévu de manière mobile perpendiculairement au plan d'extension du côté plat (20, 21) afin de modifier la distance par rapport au côté plat (20, 21).

2. Luminaire (1) selon la revendication 1, dans lequel les ouvertures de passage (5) sont conçues de manière à dévier la lumière couplée dans la plaque de guidage de lumière (2) par chaque moyen d'éclairage (3) de manière dirigée ou diffuse dans la plaque de guidage de lumière (2).

3. Luminaire (1) selon la revendication 1 ou 2, dans lequel les ouvertures de passage sont prévues dans la zone de la région de couplage (25) de la lumière des moyens d'éclairage (3), en particulier dans une région de mélange des moyens d'éclairage (3).

4. Luminaire (1) selon l'une des revendications précédentes, dans lequel les ouvertures de passage (5) s'étendent perpendiculairement entre les deux côtés plats (20, 21).

5. Luminaire (1) selon l'une des revendications précédentes, dans lequel les ouvertures de passage (5), vues en vue de dessus sur la plaque de guidage de lumière (2), sont disposées de manière coudée par rapport au côté frontal (22, 23) ou par rapport au moyen d'éclairage (3) respectif afin d'être au moins partiellement à un certain angle par rapport au moyen d'éclairage (3) respectif, de sorte que la lumière est déviée par réflexion totale sur les ouvertures de passage (5) ou de manière à traverser les ouvertures de passage (5).

6. Luminaire (1) selon l'une des revendications précédentes, dans lequel les ouvertures de passage (5), vues en vue de dessus sur la plaque de guidage de lumière (2), sont disposées en une ou plusieurs rangées par rapport au côté frontal (22, 23) ou aux moyens d'éclairage (3).

7. Luminaire (1) selon l'une des revendications précédentes, dans lequel les ouvertures de passage (5) présentent, de préférence au moins dans la zone de leurs surfaces de délimitation avec la plaque de guidage de lumière (2), des structures (51) influençant la lumière, comme par exemple des réflecteurs et/ou des structures ou éléments diffusant la lumière ou dirigeant la lumière.

8. Luminaire (1) selon l'une des revendications précédentes, dans lequel l'élément réflecteur et/ou élément diffuseur est un élément de type MCPet.

9. Luminaire (1) selon l'une des revendications précédentes, dans lequel les moyens d'éclairage (3) présentent des DEL ou des modules DEL.

10. Luminaire (1) selon l'une des revendications précédentes, dans lequel la distance, le pas, entre des moyens d'éclairage (3) respectivement voisins, en particulier des DEL, va jusqu'à 12 mm, de préférence jusqu'à 18 mm, plus préférablement jusqu'à 22 mm et de manière particulièrement préférée jusqu'à 25 mm.
